# EUROPEAN PATENT APPLICATION

(11) **EP 4 621 746 A1**
(43) Date of publication of application: **24.09.2025**
(21) Application number: 24164557.1
(22) Date of filing: 19.03.2024
(51) Int. Cl.: G07F 11/14, B07C 1/02, B65G 1/04, B65G 59/02, G06Q 10/087, G07F 11/16, G07F 11/42, G07F 11/60

(54) **LOADING AND RECEIVING SLUICE FOR AUTOMATED PARCEL TERMINALS**

(71) Applicant: Retail Robotics Manufacturing & Services Sp. z o.o., 43-110 Tychy (PL)
(72) Inventor: OSSOWSKI, Michal, 94-122 Lodz (PL); ZAKRZEWSKI, Michal, 03-285 Warszawa (PL); SEDEK, Jaroslaw, 05-408 Lipowo (PL)
(74) Representative: Markieta, Jaroslaw Franciszek

(57) **Abstract**

The subject of the application is a loading and receiving sluice for automated parcel terminals (APT) provided with automatically opening gate (17) giving a user access to a transport tray (21) in a loading and receiving area **characterised in that** below the loading gate (17), the sluice (1) is provided with a stacking mechanism (20) for stacking empty transport trays (21), whereby the stacking mechanism (20) is provided with a lift for lifting a stack of stacked transport trays (21), so that the tray (21) at the top of the stack of the trays is in a position ready for insertion into the loading and receiving area, furthermore, the sluice (1) is provided with a gripping system for a transport mechanism (15) that picks up and puts down the transport tray (21) on and off the stack of the stacked trays and is adapted to be placed in the loading and receiving area.

## Description

The object of the invention is a loading and receiving sluice for automated parcel terminals.

The invention is intended for use in automated parcel terminals (APT), such as parcel machines, points of sale, etc.

Publication CN208747157U discloses an automated storage device for transport trays nested one inside the other and a tray structure to be applied in such a device. The tray according to this disclosure has diagonally sloping walls, a flat bottom, and a horizontal edge curved around the entire circumference. In addition, there are three limiters running vertically down the front wall to maintain the distance between the trays when they are stacked. The tray stacking unit consists of two side assemblies, namely the left-side assembly and the right-side assembly.

Publication US2020402340A1 discloses an automatic self-service parcel terminal using parcel trays. The automated parcel terminal uses parcel trays to store goods (parcels) of various sizes and transport them inside the terminal. The use of trays allows goods of different sizes and irregular shapes to be stored without imposing strict requirements on their packaging. The parcel tray comprises a tray base and a metal plate (preferably steel) at one end. The steel plate is the mounting point for the electromagnet, which is used to transfer the parcel tray to and from the loader, perpendicular to the travel path of the rail of the conveying machine. The base of the parcel tray is advantageously provided with chamfered corners and tapered sides to guide the parcel tray between the two columns supporting the shelves or into the loader. The tray base can be made from various materials, including steel, stainless steel, various thermoplastics and composites, among others. The tray moves on rolls located in guides.

Publication US2022081211A1 discloses an automatic parcel terminal having one or more inlet and pick-up points. The terminal is equipped with a lift cage and a loader that enables specially designed trays to be transported to and from the racking columns on either side of the lift cage. The lift and loader unit enables the loader to handle multiple shelf columns at the terminal. The loader has a rear cover configured to protect users from moving parts of the terminal, but also to support trays in the shelf column while the loader pulls one tray from the shelf column. The unit uses a storage tray that generally has four sides, with two parallel sides having tray side extensions. Advantageously, underneath the tray side extensions, there are toothed coupling sprockets running transversely to the side of the tray and parallel to each other along the entire length of the tray. The tray is driven directly by sprockets.

In some embodiments in US202208121 1A1, the coupling sprockets may have different lengths or may be positioned differently. The tray side extensions also include a bearing surface. The profile of the toothed bar facilitates very high precision movements. The bearing surfaces are above the coupling sprocket and extend further outwards than the coupling sprockets. Bearing surfaces are used to support the trays after they have been placed in the shelf columns between the shelf supports. The bearing surfaces also support the trays when they are placed on the loader; they are also configured to guide the trays during the process of moving from the loader to the shelf columns and vice versa. The support surfaces have tapered ends at both ends to guide the parcel tray onto the loader as it is pulled from the shelf column of the automatic parcel terminal.

A problem that occurs in the sluices of automated parcel terminals is the storage of empty transport trays and the safety of customers receiving or placing parcels at the automated parcel terminal.

The object of the invention is the loading and receiving sluice for an automated parcel terminals APT provided with an automatically opening first gate giving a user access to a transport tray in a loading and receiving area. The sluice according to the invention is characterised in that the sluice is provided with a mechanism for stacking empty transport trays below the loading gate. The stacking mechanism is equipped with a lift that raises the stack of stacked transport trays so that the tray at the top of the stack of trays is in a position ready for insertion into the loading and receiving area. The sluice according to the invention is provided with a gripping system for a transport mechanism that picks up and puts down the transport tray on and off the stack of stacked trays and is adapted to be placed in the loading and receiving area.

Advantageously, the sluice according to the invention is characterised in that a scales measuring the weight of the tray is built into the loading and receiving area.

Advantageously, the sluice according to the invention is characterised in that the scales for measuring the weight of the tray uses a set of strain gauges measuring the pressure of the tray on the support bars, on which the tray rests in the loading and receiving area.

Advantageously, the sluice according to the invention is characterised in that it is provided with opening sensors of the first gate, and the sluice controller is adapted so that it does not generate a signal for starting the transport mechanism when the first gate of the sluice is open.

Advantageously, the sluice according to the invention is characterised in that it is provided with sensors for detecting the height of the product placed in the transport tray contained in the sluice.

Advantageously, the sluice according to the invention is characterised in that it is provided with a second gate separating the loading and receiving area of the sluice and the working space of the Cartesian robot.

Advantageously, the sluice according to the invention is characterised in that it is provided with opening sensors of the second gate, and the sluice controller is adapted so that it does not generate a signal for opening the first gate when the second gate of the sluice is open.

The advantage of the sluice according to the invention is small space occupied, achieved by stacking the trays, and the safety of operation is ensured by the application of appropriate sensors and an access control system.

The advantageous embodiment of the subject of the invention has been shown in greater detail in the following figures, whereby:
- Fig. 1: shows a loading and receiving sluice according to the invention;
- Fig. 2: shows a cross-sectional view of an automated parcel terminal provided with a sluice according to the invention;
- Fig. 3: gripper adapted to place a tray in the receiving and loading area of the sluice according to the invention, at the automated parcel terminal;
- Fig. 4: a tray adapted for use with a sluice according to the invention.

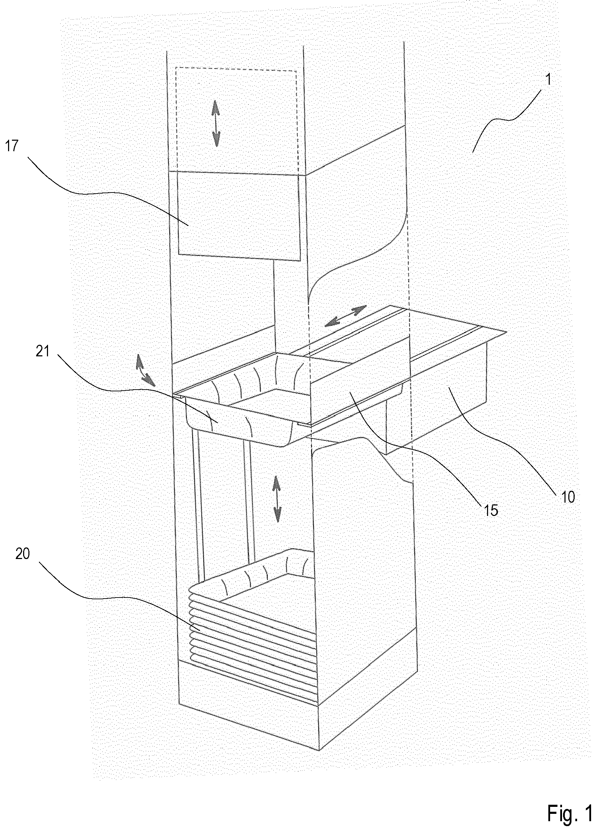

Fig. 1 shows schematically a sluice 1 according to the invention for use in automated parcel terminals APT. A tray 21 is in a loading and receiving position in sluice 1. The loading and receiving area enables parcels/products to be picked up or loaded to/from the automated parcel terminal. This area is accessible from the front when the gate 17 of the sluice 1 is in an open position. The sluice gate is provided with a number of sensors to measure its position, and preferably also with a light curtain, the output signals of which increases the safety of using the sluice. Precisely for the safety reasons, the transport of the tray 21 into the sluice 1 takes place only when the gate 17 of the sluice is closed. Advantageously, the sluice 1 is provided with a second gate separating the sluice area from the Cartesian robot work area, thus increasing the safety of people using the automated parcel terminal APT. The second gate 17' is provided with a sensor for transmitting an opening signal of the second gate 17' to the controller, and the controller is arranged so that the second gate 17' remains closed when the front first gate 17 of the sluice 1 is open, i.e., the sluice controller is arranged so that it does not generate an opening signal of the first gate 17 when the second gate 17' of the sluice is open. The fact that the controller of the automated parcel terminal maintains such a dependency in the opening of the gate makes it possible to further increase the safety of those using the APT.

The procedure is supervised by software using a suitably programmed automated parcel terminal controller. From the loading and receiving position, tray 21 is transported to a storage 20 of empty trays 21, preferably located below the loading and receiving area. The trays 21 are preferably stored in stacked form, i.e., individual trays 21 are partially nested in one another.

Empty trays 21, which are to be loaded into the loading area, are retrieved from the storage 20 by means of a lift, which lifts the entire stack of stacked trays 21 so that the tray 21 at the top of the stack is in the loading position. Advantageously, the lift lifting the stack of stacked trays 21 is of scissors type or chain-driven.

Then the tray 21 from the top of the tray stack is separated from the tray stack by the gripping system of a transport mechanism 15, which grips the tray from sides. The gate 17 is then opened (lifted up) and the customer places a parcel to be placed at the delivery point in an empty tray 21. The gripping system of the transport mechanism 15 is advantageously provided with a scales that determines the weight of the tray 21 with the placed product, which makes it possible to determine whether the tray has been loaded and the weight of the placed parcel. The controller of the automated parcel terminal can check that the weight and dimensions of the placed parcel do not exceed the permissible weight or dimension limit for the transport system. Other sensors, e.g., those identifying the parcel, such as barcode, QR code, or RFiD tag readers, can advantageously be placed in the loading area. When the parcel is qualified as meeting the acceptance criteria for the automated parcel terminal, the gate 17 is closed and the loaded tray 21 is retrieved from the loading area by a gripper 10 of the transport robot and is moved so that it is in the transport position of the robot, i.e., over the gripper 10 in this embodiment. The gripper 10 is integrated with the Cartesian robot so that it moves the gripper 10 together with the loaded tray 21 to the storage position, where the tray 21 is deposited on a storage rack.

Picking up loaded tray 21 from its storage position on the storage rack and transferring it to the loading and receiving area of sluice 1 is done in reverse order.

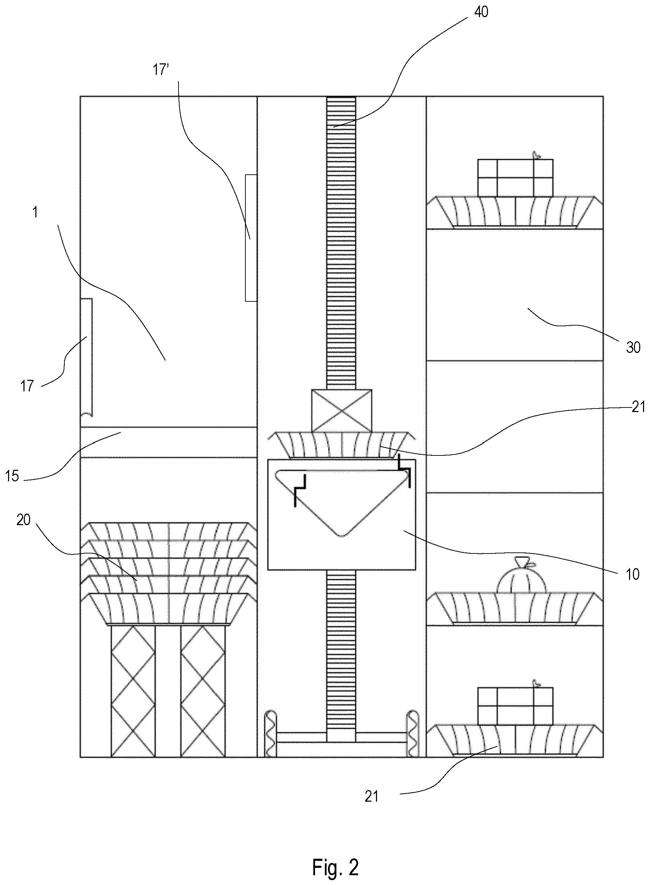

Fig. 2 shows schematically in cross-section an automated parcel terminal provided with the sluice 1 according to the invention. In the position shown in Fig. 2, the sluice 1 is empty and the gate 17 is closed. The loaded tray 21 is in the transport position of the gripper 10, mounted on Cartesian robot 40. The Cartesian robot 40 can move the gripper 10 together with the tray 21 inside the automated parcel terminal APT, so that the tray can be deposited in an empty space on a storage rack 30. In Fig. 2, some shelves of the rack 30 are occupied by transport trays 21.

Fig. 2 shows a cross-sectional view of the transport system used in automated parcel terminals APT. In these solutions, various robotic systems are used to move the trays that contain the stored products. Typically, these are XY Cartesian robots, i.e., with a moving element, e.g., the gripper 10, travelling in the working plane in front of a storage wall provided with the storage rack 30 with shelves in which the trays 21 are deposited. The task of Cartesian robot 40 is to pick up or put down a transport tray from a storage drawer and deliver it to the loading and receiving sluice. This configuration of the Cartesian robot requires the use of the gripper 10 that provides movement of the transport tray in the Z axis, perpendicular to the XY axis in which only Cartesian robot 40 moves.

Advantageously, the sluice 1 is characterised in that it is provided with sensors for detecting the height of the product placed in the transport tray contained in the sluice. Whereby the automated parcel terminal APT controller is adapted to use the signal from the sensors to measure the height of the product in the sluice, to select a storage position in a storage rack where the individual storage positions have different heights.

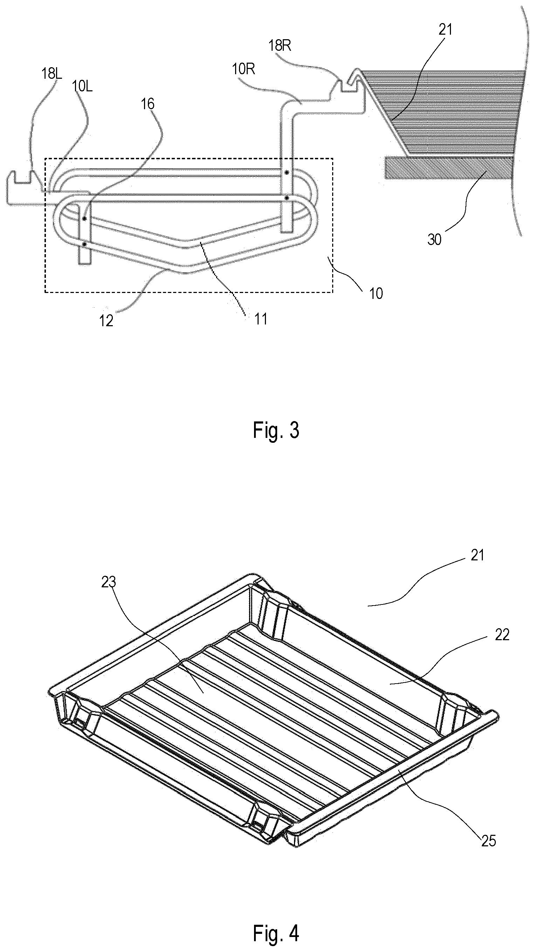

Fig. 3 shows the gripper 10 of the transport tray for automated parcel terminals APTs according to a preferred embodiment. The gripper 10 includes two grips 10L, 10R, and two drive chains 11, 12, with the drive chains supported on sprockets and a tensioner. The grips 10L, 10R are provided with at least two gripping forks 18L, 18R adapted to grip a transport tray 21, with the outer surfaces of the gripping forks running inclined into the inner part of fork 18L, 18R. The drive chains 11, 12 run essentially parallel to each other.

The grips 10L, 10R are positioned between drive chains 11, 12 in an axial direction parallel to the axis of the drive wheels. Positioning the grips between drive chains 11, 12 enables the grips to remain stable and does not restrict the path along which the grips move. Fixing of the grips 10L, 10R with fixing pins 16 enable the grips 10L, 10R to move together with the drive chains - also in the area of sprockets of the tensioner. Linking of the grips 10L, 10R to the chains also ensures that gripping forks 18L, 18R can move both horizontally and vertically, making it easier to hook and unhook transport tray 21. The gripping forks 18L, 18R are offset from the axis of the grip 10L, 10R, so that when they approach the outermost position, the gripping forks 18L, 18R reach beyond the outline of the gripper 10, as shown in Fig. 2. This allows the transport tray 21 to be gripped or put down outside the outline of the gripper system 10, e.g., on a shelf of the storage rack 30.

Due to the interaction of the gripping forks 18L and 18R with seats of the tray 21, the tray is moved along the guides (not shown) above the transport chain 11 during the movement of the grips. This makes it possible to move the tray horizontally 21, relative to the gripper 10, and to move it, for example, from a shelf in a storage rack to a mobile robot in the XY system, i.e., to its movable column part, which is provided with the gripper 10. The gripper 10 allows the transport tray to be moved horizontally in both directions, i.e., as shown in Fig. 2, to the right and to the left, which makes it possible to put in or take out trays from the storage rack 30 or to put in or take out the trays from the loading sluice of an automated parcel terminals.

Typically drive chains 11, 12 are driven synchronously, making the grips 10R, 10L move parallel to each other.

Fig. 4 shows an example of tray 21 adapted to work with the sluice 1, according to the invention, and the gripper 10. The transport tray 21 for automated parcel terminals ATP is provided with a carrying chamber 22 having a bottom 23. Outline of the tray 21 is rectangular in shape with ribbing reinforcing the bottom 23. The tray is provided with four walls, two side walls and a front and rear wall. The ribbing runs transversely over the bottom 23, i.e., between the side walls. The ribbing stiffens the construction of the bottom by preventing the bottom from bending downwards under the pressure of the parcel being transported or stored. The tray 21 is also provided with side bars 25 located at the upper edges of the side walls. The function of the side bars 25 is to hold the tray between the sliding guides of the rack and engaging with the gripping system of the transport mechanism 15 inside the sluice 1 of the automated parcel terminal. Advantageously, in the tray 21, the tray walls are inclined upwards slanting outwards from the vertical axis of transport chamber 21. This shape of the tray walls makes it easy to store the trays one inside the other.

## Claims

1. A loading and receiving sluice for automated parcel terminals (APT) provided with
automatically opening gate (17) giving a user access to a transport tray (21) in a loading and receiving area
**characterised in that**
below the loading gate (17), the sluice (1) is provided with a stacking mechanism (20) for stacking empty transport trays (21), whereby the stacking mechanism (20) is provided with a lift for lifting a stack of stacked transport trays (21), so that the tray (21) at the top of the stack of the trays is in a position ready for insertion into the loading and receiving area, furthermore, the sluice (1) is provided with a gripping system for a transport mechanism (15) that picks up and puts down the transport tray (21) on and off the stack of the stacked trays and is adapted to be placed in the loading and receiving area.

2. The sluice according to claim 1, **characterised in that** a scale measuring the weight of the tray is built into the loading and receiving area.

3. The sluice according to claim 2, **characterised in that** the scales for measuring the weight of the tray uses a set of strain gauges measuring the pressure of the tray on the support bars on which the tray rests in the loading and receiving area.

4. The sluice according to any of the claims 1 to 3, **characterised in that** it is provided with opening sensors of the gate, and the sluice controller is adapted so that it does not generate a signal for starting the transport mechanism (15) when the gate of the sluice is open.

5. The sluice according to any of the claims 1 to 4, **characterised in that** it is provided with sensors for detecting the height of the product placed in the transport tray located in the sluice.

6. The sluice according to any of the claims 1 to 5, **characterised in that** it is provided with a second gate (17') separating the loading and unloading area of the sluice (1) and the working area of the Cartesian robot (40).

7. The sluice according to any of claims 1 to 6, **characterised in that** it is provided with opening sensors of the second gate (17'), and the gate controller is adapted not to generate a signal for opening the first gate (17), when the second gate (17') of the sluice is open.
